# EUROPEAN PATENT APPLICATION

(11) **EP 1 631 047 A2**
(43) Date of publication of application: **01.03.2006**
(21) Application number: 05380158.5
(22) Date of filing: 18.07.2005
(51) Int. Cl.: H04M 1/253, H04L 29/06, H04L 9/34, H04K 1/06

(54) **Apparatus and methods for simultaneous voice and data communication**

(30) Priority: 27.08.2004 AR 0403094
(71) Applicant: Esteban Sarmiento, Daniel, 28028 Madrid (ES)
(72) Inventor: Esteban Sarmiento, Daniel, 28028 Madrid (ES)

(57) **Abstract**

And apparatus, so-called teledataphone, for integrated and simultaneous voice and data communication with all the hardware components, programs and necessary interface modules to provide voice communications sending and receiving either audio signals through PSTN, or IP packages through Internet, the teledataphone comprises: a compact and integrated unit with conventional standard telephone, IP telephone, router, board or chip for proprietary package data encryption, control processing unit, and interface modules for non-telephonically Internet access technologies; means for enabling that a single computer or computers network linked to the router could navigate the Internet in simultaneous way with a conventional or IP telephone call; means for generating by itself all the signalling IP packages necessary to set up an IP telephone call with another teledataphone, without depending on a central telephone switching system, or central server, or central interface board which officiate as nexus, intermediary or concentrator, be all these equipment either public or private; means for sending and receiving IP telephone calls towards and from any place of the world without being captive from a unique central server but registering itself like a subscriber on an added value ISP company; means for interconnecting into a LAN enabling each of the subscribers, with its own teledataphones, making IP telephone calls and in simultaneous way navigating the Internet from its computer.

## Description

Apparatus and method for integrated and simultaneous voice and data communication.

Applicant Mr. Daniel Esteban Sarmiento - Citizenship: Argentine Residence: Chiclana 54 - Zip Code 1876 - Bernal - Buenos Aires - Argentine. Email: sarmientodaniel@arnet.com.ar

### CROSS-REFERENCE TO RELATED APPLICATIONS

Patent number US 616 9734 published on 2.january.2001.

Patent number WO 0120890 published on 22.march.2001.

Patent number US2002/2085561 published on 04.july.2002.

Patent number WO 2004/051969 published on 17.june.2004.

Patent number US2002/089975 published on 11.july.2002.

### STATEMENT REGARDLING FEDERALLY SPONSORED RESEARCH OR DEVELOPMENT

"Not Applicable"

### REFERENCE TO SEQUENCE LISTING, A TABLE, OR A COMPUTER PROGRAM LISTING COMPACT DISK APPENDIX

"Not Applicable"

### BACKGROUND OF THE INVENTION

The apparatus for integrated and simultaneous voice and data communication, from now on so-called "Teledataphone", has residential, shopping and enterprising use. A person, a shop or a company, through the teledataphone, could:
- communicate telephonically with another person, shop or company by means of the actual conventional way, that is, through the Public Switched Telephone Network (PSTN),
- communicate telephonically with another person, shop or company through the IP protocol Public Switched Packet Network or Internet,
- navigate the Internet (email, explorer or chat applications, etc.) from either a single computer or a computers network, whenever linked to the teledataphone.

The teledataphone allows performing voice communication either by PSTN or by Internet and, in a simultaneous way, allows Internet navigating and/or data exchanging with any computer linked to it.

The teledataphone functions with any broadband Internet access technology that the user has, that is: a) telephone pair, b) cable, c) optical fiber, d) microwave link, e) satellital link, f) electrical network link, g) wireless connection.

Description of the prior art.

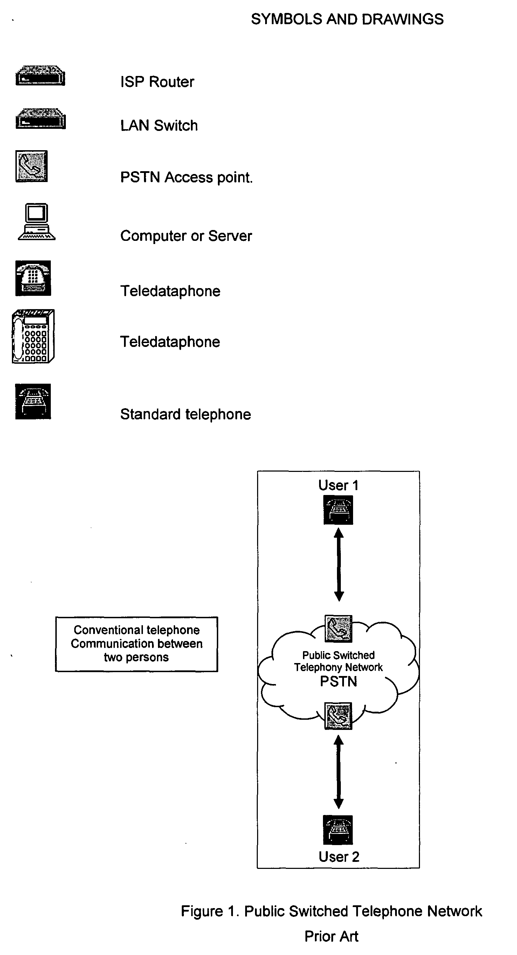

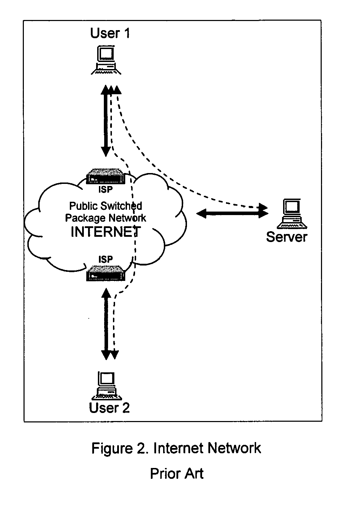

It is public knowledge the existence of:
- Public Switched Telephone Network (PSTN) which allows persons, shops and/or enterprises communicating between each other through devices so-called telephones. See Figure 1
- Public Switched Packet Networks, where IP Internet protocol is nowadays the most important and used network, which allows persons, shops and/or enterprises searching for information and exchanging files and/or data through electronic mail or chat. See Figure 2

The teledataphone enables to perform local, national and international telephone calls at a very low cost rate, taking advantage of the broadband Internet access, and simultaneously, to access the Internet from either a single computer or a computers network linked to it.

Within the broadband flat fee, two users could, each one with its own teledataphone, talk each other telephonically and navigate the Internet in simultaneous way. They could make both tasks even without the PSTN link. Examples:
a. a user from Argentine, with its own teledataphone, can talk telephonically with another user from Spain by means of the IP protocol, if the latter has another teledataphone. Simultaneously, both of them could navigate the Internet,
b. a user from Argentine, with its own teledataphone, can talk telephonically with another user from Spain through PSTN, if the latter has a simple telephone. Simultaneously, both of them could navigate the Internet.

It is obvious that the telephone call of the example 'a' is much cheaper than that of the example 'b', because it is not rated by minutes and/or pulses, but by a broadband flat fee.

A telephone call made through Internet IP protocol, or simply and IP telephone call, with a teledataphone enables talking one hour, two, or all the time wished without any additional cost related to telephone pulses. With the broadband monthly flat fee that an Internet Service Provider (ISP) offers, any user could talk 24 hours per day, 30 days per month, and, simultaneously, navigate the Internet from its single computer or computers network.

The teledataphone for integrated and simultaneous voice and data communication has advantages with respect other related paten applications: a) adds the Internet navigation of a single computer or computers network; b) provides an integrated and compact solution with IP telephone, conventional telephone, router, electronic chip for data encryption, control processing unit and interface modules for non-telephonically internet access technologies; c) allows using reduce broadband thanks to a proprietary encryption method; d) does not requires the use of external servers for signaling, all these among further additional features mentioned below.

### BRIEF SUMMARY OF THE INVENTION

And apparatus, so-called teledataphone, for integrated and simultaneous voice and data communication with all the hardware components, programs and necessary interface modules to provide voice communications sending and receiving either audio signals through PSTN, or IP packages through Internet, the teledataphone comprises: a compact and integrated unit with conventional standard telephone, IP telephone, router, board or chip for proprietary package data encryption, control processing unit, and interface modules for non-telephonically Internet access technologies; means for enabling that a single computer or computers network linked to the router could navigate the Internet in simultaneous way with a conventional or IP telephone call; means for generating by itself all the signalling IP packages necessary to set up an IP telephone call with another teledataphone, without depending on a central telephone switching system, or central server, or central interface board which officiate as nexus, intermediary or concentrator, be all these equipment either public or private; means for sending and receiving IP telephone calls towards and from any place of the world without being captive from a unique central server but registering itself like a subscriber on an added value ISP company; means for interconnecting into a LAN enabling each of the subscribers, with its own teledataphones, making IP telephone calls and in simultaneous way navigating the Internet from its computer.

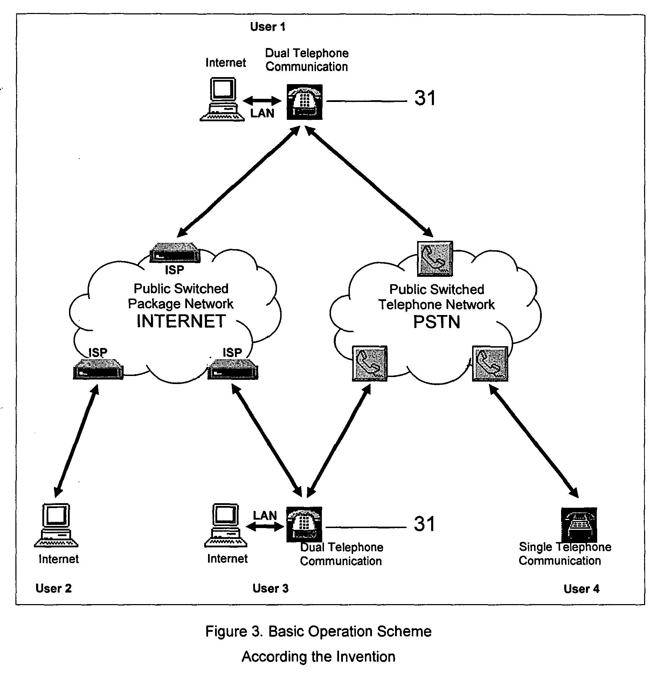

In the Basic Operation Scheme described in Figure 3, four users are represented:
a. users 1 and 3 have a teledataphone 31,
b. user 2 has a not telephonically broadband Internet access (satellital, microwave, fiber optic, etc.),
c. user 4 has a conventional standard telephone.

User 4 can communicate telephonically in the standard form, that is, through PSTN. He can speak with users 1 and 3.

User 2 can navigate and/or exchange information through the Internet both with user 1 and user 3.

Users 1 and 3 can:
a. communicate telephonically in the standard form (PSTN) with user 4,
b. exchange information and data through Internet with user 2,
c. communicate telephonically between each other in the standard form (PSTN),
d. communicate telephonically between each other through Internet with IP protocol,
e. exchange information and data between each other through Internet,
f. operations c) and e) can be made in a simultaneous way,
g. operations d) and e) can be made in a simultaneous way,
h. operations c), d) and e), on a special programming mode, can also be made in a simultaneous-switched way,
i. perform three persons conference, for example, users 1, 3 and 4.

### BRIEF DESCRIPTION OF THE DRAWINGS

Figure 1. Public Switched Telephone Network. Simplified Diagram of the standard telephone network, according the Prior Art.

Figure 2. Internet Public Switched Package Network. Simplified Diagram of Internet Network, according the Prior Art.

Figure 3. Basic Operation Scheme, according the invention, where main teledataphone features are showed.

Figure 4. Detailed Operation Scheme, according the invention, where teledataphone features are described in details.

Figure 5. Teledataphone Block Diagram, according the invention, where its different components are indicated.

Figure 6. Teledataphone Scheme, according the invention. Keys and led indicators arrangement.

Figure 7. Single Computer Internet Navigation, according the invention. Interconnection scheme between the teledataphone and a single computer which accesses the Internet.

Figure 8. Computers network Internet Navigation, according the invention. Interconnection scheme between the teledataphone and a computers network which accesses the Internet.

Figure 9. Teledataphones network, according the invention. Interconnection scheme of a teledataphones network which accesses the Internet.

### DETAILED DESCRIPTION OF THE INVENTION

Telephone operation mode of the teledataphone

As there are many different Internet access technologies, the description is based on a broadband ADSL connection, but the process is equal for any other access technology.

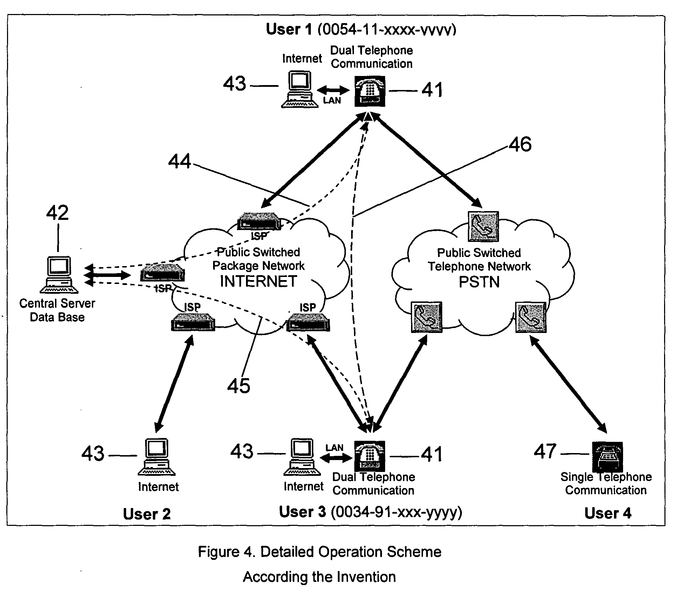

On the Detailed Operation Scheme of Figure 4 it is showed: teledataphones 41, central server 42, computers 43, register user 1 process task 44, register user 3 process task 45, IP telephone communication 46 between users 1 and 3 and standard telephone 47.

Central Server

The central server must be a redundant high availability and reliability equipment, with mirrored hot-stand-by configuration discs, redundant power supply, back up information system, uninterrupted power supply, alternative Internet access links, fixed IP public address, bandwidth higher than 6 or 8 Mbps, antivirus programs, firewall, Oracle or SQL database.

The central server could be installed in any place of the world, and could be performed by a unique server or by several interconnected servers. The latter case is actually the most convenient and applicable way to manage the teledataphones network, because it allows the users to choose freely the Internet Service Company, not depending in a captive way from a unique provider.

An Internet Service Provider (ISP) has the entire necessary infrastructure to provide central server tasks by just installing two additional software applications: a) the former for teledataphones network traffic, process and control management, b) the latter for the central servers interconnection.

Any ISP which downloads just the two above mentioned software applications can perform central server process tasks, being, in such case, an added value ISP.

A teledataphone user can send and receive IP telephone calls towards and from any place of the world without depending in a captive way from a unique central server but registering itself like a subscriber on any added value ISP company.

Permanent Subscribers Registry

When the user 1 connects its teledataphone 41 to the telephone line, he/she connects to both PSTN and Internet networks.

Once connected to Internet, he/she initiates its permanent registry process in the central server 42. The registry process of the new subscriber consists of the following steps:
a. the user manually introduces into the teledataphone the international telephone subscriber number. For example, 0054 (Argentine), 11 (Buenos Aires), and the remaining digits,
b. this operation also can be made through a computer linked to the teledataphone with neither additional software nor specific application, being able to use, for example, the HyperTerminal computer option,
c. the teledataphone informs to the user that is carrying out a "Permanent" Subscriber Registry,
d. the teledataphone requests confirmation to the user of the telephone number, showing all the digits together, so that the user verifies to have entered the correct number digits,
e. in case that the user does not have standard fixed telephone, he/she must introduce a 10-digits alphanumeric code, with obligation of selecting both letters and numbers. Letters from 'a' to 'z', and numbers from '0' to '9'. For example, carlos0015,
f. if the telephone number or alphanumeric code introduced by the user is already registered, the central server informs to the user that he/she must select a different one,
g. the user informs manually if he/she is connected through a fixed/static public IP address, or variable/dynamic IP address,
h. once finalized the data that the user must enter, the teledataphone, in a totally automatic form and now without intervention of neither the user nor any other person, it sends to the central server:
   i. the number of international telephone subscriber or, in its defect, the alphanumeric code of the user. In the Figure 4, it is the registry process 44 for user 1 and 45 for user 3,
   ii. the public IP address of the wide area network or WAN that it has been assigned at that moment, both fixed/static and variable/dynamic. See Figure 4, processes 44 and 45,
   iii. an identifier package to inform to the central server whether the IP address is fixed or variable,
   iv. the private IP address of the local area network or LAN that it has been assigned. Its default value is 192.168.1.254, although the user can change it in a simple form if wished,
i. this permanent subscriber registry process takes place ensuring the confidentiality and integrity of the transmitted data, using existing protocols with encryption algorithms for Internet traffic. Several protocols of this type exist, like for example the IPSec in Transport way with ESP (Encapsulating Security Payload) algorithm,
j. these IP registry packages are made through TCP protocol, to ensure that the process has correctly taken place,
k. both the teledataphone and the central server applications know the origin and destiny TCP ports.

The teledataphone has two private IP address in the LAN, then it acts as an Internet linked router and simultaneously as an IP telephone. The default private IP address router value is 192.168.1.1, while that of the IP telephone is 192.168.1.254.

When a subscriber modifies any of the private IP addresses of its teledataphone, he/she must be registered again.

This permanent subscriber registry process takes place by first and only one time, by means of user intervention, in any added value ISP company. In case that the subscriber must register again due to have himself/herself uncorrected registered, to have to modify his/her data, or to have changed the private IP addresses, he/she must enter the "Global Reset" option, explained more ahead.

Temporary Subscriber Registry

The user can optionally register himself/herself as a temporary user, in order to use the teledataphone in a place whose telephone number does not know and different from its regular place.

This benefit is especially interesting for a frequent traveller. For example, if the user connects the teledataphone to the telephone line of any hotel room, he/she can both speak by IP telephony and navigate the Internet with his/her portable computer.

It could carry out a national or international telephone call being charged only by the local call Dial Up access.

When the user 1 connects the teledataphone 41 to the telephone line, he/she is simultaneously connected with both PSTN and Internet networks. Once connected to Internet, he/she initiates his/her registry process in the central server 42. The temporary registry process consists of:
a. the user presses the corresponding configuration keys to indicate that it is a temporary subscriber registry,
b. he/she introduces manually a 10-digits alphanumeric code, with obligation of selecting both letters and numbers. Letters from 'a' to 'z', and numbers from '0' to '9'. For example, carlos0015,
c. this operation also can be made through a computer linked to the teledataphone with neither additional software nor specific application, being able to use, for example, the HyperTerminal computer option,
d. the teledataphone informs to the user that is carrying out a "Temporary" Subscriber Registry,
e. if the alphanumeric code introduced by the user is already registered, the central server informs to the user that he/she must select a different one,
f. once finalized the data that the user must enter, the teledataphone, in a totally automatic form and now without intervention of neither the user nor any other person, it sends to the central server:
   i. the alphanumeric code of the user. In the Figure 4, it is the registry process 44 for user 1 and 45 for user 3,
   ii. the public IP address of the wide area network or WAN that it has been assigned at that moment, both fixed/static and variable/dynamic. See Figure 4, processes 44 and 45,
   iii. the private IP address of the local area network or LAN that it has been assigned. Its default value is 192.168.1.254, although the user can change it in a simple form if wished,
g. this temporary subscriber registry process takes place ensuring the confidentiality and integrity of the transmitted data, using existing protocols with encryption algorithms for Internet traffic. Several protocols of this type exist, like for example the IPSec in Transport way with ESP (Encapsulating Security Payload) algorithm,
h. these IP registry packages are made through TCP protocol, to ensure that the process has correctly taken place,
i. both the teledataphone and the central server applications know the origin and destiny TCP ports.

This temporary subscriber registry process takes place by first and only one time, by means of user intervention, in any added value ISP company and it is not obligatory. In case that the subscriber must register again due to have himself/herself uncorrected registered, to have to modify its data, or to have changed the private IP addresses, it must enter the "Global Reset" option, explained more ahead.

Periodical Registry

The teledataphone has the capacity to periodically register itself as subscriber in the central server in an automatic form, without knowledge or possible intervention of any person, and independently of his/her actions, and at regular intervals between 10 and 40 seconds when it is linked to Internet through variable/dynamic public IP address and between 12 and 24 hours when linked through fixed/static public IP address.

In the case of variable public IP address, the selected time interval is the result of a commitment relation for the traffic data through Internet network: if the teledataphone were registered in a time interval smaller than 10 seconds, a saturation and/or traffic congestion could take place; if the registry time interval were greater than 40 seconds, the more greater would be the possibility that the central server couldn't find the teledataphone when it has an IP telephone call to transfer to it.

This periodical registry process consists of:
a. the teledataphone sends to the central server:
   i. the number of international telephone subscriber or, in its defect, the alphanumeric code of the user. In the Figure 4, it is the registry process 44 for user 1 and 45 for user 3,
   ii. the public IP address of the WAN that it has been assigned at that moment, both fixed/static and variable/dynamic. See Figure 4, processes 44 and 45,
   iii. the private IP address of the LAN that it has been assigned. Its default value is 192.168.1.254, although the user can change it in a simple form if wished,
b. this periodical subscriber registry process takes place ensuring the confidentiality and integrity of the transmitted data, using existing protocols with encryption algorithms for Internet traffic. Several protocols of this type exist, like for example the IPSec in Transport way with ESP (Encapsulating Security Payload) algorithm,
c. these IP registry packages are made through TCP protocol, to ensure that the process has correctly taken place,
d. both the teledataphone and the central server applications know the origin and destiny TCP ports,
e. after a voluntary or involuntary network Internet disconnection, the teledataphone is registered again in an automatic form without intervention of any person,
f. at the moment for settling down an IP telephone call, these periodical registry processes are temporarily interrupted.

The teledataphone is periodically registered using the international unified telephone numeration and/or using an own alphanumeric code, without knowing the public IP address.

Also, the teledataphone is smart enough to avoid unnecessary data packages traffic due to periodical registry process when there is an IP telephone call in course.

Finally, it can function with subscribers whose Internet connection has either a fixed/static or a variable/dynamic IP address.

Database Generation

The central server generates a subscribers database constructing a table with the following values:

| **SUBSCRIBER** | **IDENTIFIER** | **PUBLIC IP** | **FIXED** | **PRIVATE IP** | **SECRET CODE** |
|---|---|---|---|---|---|
| 1 | 0054-11-XXXX-YYYY(Arg.) | 200.XX.YY.ZZ | no | 192.168.1.254 | Updated |
| 3 | 0034-91-XXX-YYYY (Spa.) | 80.XX.YY.ZZ | no | 192.168.1.254 | Updated |
| 5 | carlos0015 | 66.XX.YY.ZZ | Yes | 192.168.1.254 | Updated |

The third line corresponds to a subscriber 5, not showed in the Figure 4, which has an alphanumeric code and fixed public IP address. This database is permanently updated, at regular time intervals between 10 and 40 seconds for those teledataphones that access the Internet through variable public IP addresses, and between 12 and 24 hours for those teledataphones that access the Internet through fixed public IP addresses, with the exception, as already seen, that a subscriber is communicating by IP telephony, in which case, the periodic registry process is temporarily interrupted in any of both cases.

The "Secret code" field details whether the teledataphone has its secret code updated or not. This subject will be explained in more detail in further pages.

A registered subscriber who does not access to the central server during a six months period is automatically terminated, unless the subscriber asks in express form for his/her continuity.

Registry Check

The central server checks that two identical telephone numbers and/or two identical alphanumeric codes cannot exist. If a user tries to register himself/herself, for example like 'carlos0015', the server will inform him/her that such code already exists, having to select a different one. In analogous form it is made for the telephone numbers.

The central server prevents that a user registers himself/herself under an incorrect form by the international telephone numeration. If a user enters a mistaken digit in his/her telephone number when registering himself/herself with his/her teledataphone, he/she will not be able to receive IP telephone calls, and it will not allow to another user to enter his/her own number. This problem is solved in two different ways:
a. Central Call
   i. as soon as a subscriber has registered himself/herself entering his/her complete data, the server calls to this subscriber by IP telephony,
   ii. the call transmitter is an operator or an automated system which works in multifrequency way,
   iii. if the subscriber responds and confirms the data by voice or via keyboard, the registry process is confirmed and the information is stored in the database,
   iv. if the subscriber does not respond or he/she does not confirm the data, the registry process is considered disabled and the subscriber is terminated, forcing the subscriber to become to a new registry process,
   v. his/her teledataphone informs it with a "User Not Registered" message in the display,
b. Remote Call
   i. as soon as a subscriber has registered himself/herself entering his/her complete data, the teledataphone remains inhibited for IP telephony until the subscriber performs an IP telephone call to a prefixed telephone number,
   ii. the call receiver is a centralized device that responds in an automatic form and provided with an incoming number identification,
   iii. an aloud recording informs to the subscriber his/her telephone number,
   iv. if the subscriber confirms the data by voice or via keyboard, the registry process is confirmed and the information is stored in the database,
   v. if the subscriber does not confirm the data, the registry process considers disabled and the subscriber is terminated, forcing the subscriber to become to a new registry process.
   vi. his/her teledataphone informs it with a "User Not Registered" message in the display.

The added value Internet services provider (ISP) selects any of both methods to check the registry process.

Signaling

Both the teledataphone and the central server have the capacity to generate by themselves IP signaling packages equivalent to the signaling tones that a conventional telephone switching system generates being either public or private. These packages are classified in:
a. "transmitting call request", generated after the transmitter dials the telephone number or the alphanumeric code of the receiver and presses the "Called" command key. This package is sent from the transmitter to the central server, it has TCP protocol and it is encrypted,
b. "transmitting call answer", generated by the central server as an answer to the "transmitting call request" package, it contains public and private IP addresses of the receiver, it has TCP protocol and it is encrypted. It is sent from the central server to the transmitter,
c. "incoming call request", generated by the central server as an answer to the "transmitting call request" package, it contains public and private IP addresses of the transmitter, it has TCP protocol and it is encrypted. It is sent from the central server to the receiver,
d. "transmitter ringing", generated by the transmitter as soon as it receives the IP "transmitting call answer" package or when the transmitter presses the "Direct Call" command key. This package is sent from the transmitter to the receiver in a periodical form every 4,5 seconds, it has TCP protocol, it is encrypted, and it is cancelled when the transmitter generates itself the IP "transmitter ringing end" package or when the transmitter receives from the receiver the "receiving attention" package. The receiver, when decodes this IP package, emits a ringing bell during 1,5 seconds and remains in silence until the arrival of the next "transmitter ringing" package, that is, with an estimated cadence of 1,5 sound seconds / 3,0 silence seconds,
e. "receiver ringing", generated by the receiver to inform to the transmitter that the receiver teledataphone is ringing waiting for attendance. This package is sent from the receiver to the transmitter in a periodical form every 4,5 seconds, it has TCP protocol, it is encrypted, and it is cancelled after being sent for more than 2 minutes, or when the receiver receives from the transmitter the "transmitter ringing end" package, or when the receiver generates the "receiving attention" package. The transmitter, when decodes this IP package, generates a call tone of frequency 425 +/-15 Hertz which the transmitter subscriber listens in his/her loudspeaker or handset with an estimated cadence of 1,5 sound seconds / 3,0 silence seconds,
f. "busy", generated by the receiver to inform to the transmitter that there is in course one telephone call. This package is sent from the receiver to the transmitter in a periodical form every 1,5 seconds, it has TCP protocol, it is encrypted, and it is cancelled after being sent for more than 2 minutes, or when the receiver cuts its present communication, or when receives from the transmitter the "transmitter ringing end" package. The transmitter, when decodes this IP package, generates a busy tone of frequency 425 +/-15 Hertz which the transmitter subscriber listens in his/her loudspeaker or handset with an estimated cadence of 0,75 sound seconds /0,75 silence seconds,
g. "receiving attention", generated by the receiver when it attends the IP telephone call that the transmitter is sending. This package is sent from the receiver to the transmitter, it has TCP protocol, it is encrypted and it cancels the sending of the "receiving ringing" package. When the transmitter receives it, it cancels the sending of the "ringing" package", I
h. "transmitter ringing end", generated by the transmitter when it decides by its own to leave its attempt to communicate with the receiver, or after having been calling to the receiver for more than 2 minutes. This package is sent from the transmitter to the receiver, it has TCP protocol, it is encrypted and it cancels the sending of the j "receiver ringing" or "busy" packages by the receiver, and the "transmitter ringing" package by the transmitter,
i. "destiny ports", generated by the receiver after having sent the package "receiving attention", in order to inform to the transmitter the UDP ports values that the receiver will use to send and to receive voice packages. This package is sent from the receiver to the transmitter, it has TCP protocol and it is encrypted,
j. "origin ports", generated by the transmitter when it has received from the receiver the package "receiving attention", in order to inform to the receiver the UDP ports values that the transmitter will use to send and to receive voice packages. This package is sent from the transmitter to the receiver, it has TCP protocol and it is encrypted,
k. "cut", generated by any of the two subscribers, transmitter or receiver, when they decide to cut IP telephone communications. The package has TCP protocol, it is encrypted, and it is sent from one teledataphone to the other to inform that it has finalized the communication and it has released UDP ports.

These IP registry packages are made through TCP protocol, to ensure that the process has correctly taken place, ensuring the confidentiality and integrity of the transmitted data, using existing protocols with encryption algorithms for Internet traffic. Several protocols of this type exist, like for example the IPSec in Transport way with ESP (Encapsulating Security Payload) algorithm. Both teledataphone applications know the origin and destiny TCP ports.

The necessary previous TCP protocol packages for establishing the connection between teledataphones are not mentioned here.

In addition to these signaling packages, the transmitter teledataphone has the capacity to generate these other signals:
a. "destiny subscriber not reached", this signal is not in fact an IP package that travels by Internet, but a signal that generates the transmitter itself when does not receive answer after being sending a "transmitter ringing" package for a period greater than 10 or 15 seconds, or after being sending for more than 2 minutes the "transmitter ringing" package to a receiver that continuously responds with the "receiver ringing" package. It is interpreted that the receiver has a transitory congestion problem caused by the added value ISP to which it is connected, or that it has recently changed its dynamic IP address and was not able yet to register itself in the central server. The transmitter subscriber listens in his/her handset a tone of frequency of 425 +/-15 Hertz whose estimated cadence is 0,2 sound seconds / 0,3 silence seconds,
b. "dead line", generated both by the transmitter and the receiver. As mentioned above, this signal is not an IP package that travels by Internet, but it is generated when the teledataphone does not access the Internet, or after having cut a communication and maintained the handset without hanging for more than 5 seconds. The subscriber, transmitter or receiver, listens to a tone of frequency of 425 +/-15 Hertz whose estimated cadence is 0,2 sound seconds / 0,3 silence seconds.

The central server generates all IP signaling packages and the two signals previously described and, additionally, it generates:
a. "destiny subscriber not registered", this IP signaling package is sent from the central server to the transmitter when the former does not find the IP addresses of the receiver whom the transmitter has asked for, sending the "transmitting call request" package. The transmitter, when decodes this IP package, generates a tone of an increasing frequency from 950 to 1.800 Hertz, in three successive and contiguous steps of 950, 1.400 and 1.800 Hertz, with 333 mseg. of duration each one, being in an estimated cadence of 1 second sound / 1 silence seconds.

The teledataphone has the unique and significant advantage of being able to generate signaling packages. Neither the conventional telephone nor the IP telephone has the capacity to make it. For these devices, the signaling packages are always managed and controlled by the central telephone switching system, by a centralized interface board, or by a centralized server, be all these equipment private or public, conventional, pure IP or mixed.

The central server stores teledataphones public and private IP addresses due to the existence of dynamic/variable IP addresses. If all public IP addresses were static/fixed, the packages "transmitter call request", "transmitter call answer" and "incoming call request" would not exist.

In fact, if two teledataphones subscribers have fixed IP address, the packages previously mentioned are not necessary and can be avoided. The teledataphone has a buffer to store teledataphones subscribers with fixed IP addresses. Every time a transmitter subscriber calls to a receiver subscriber whom he/she has a fixed IP address and whom he/she is stored in his/her memory, the packages "transmitter call request", "transmitter call to answer" and "incoming call request" are directly not generated.

The teledataphone differences itself form both a conventional and an IP telephone because it has enough intelligence to perform all the necessary signaling to establish an IP voice communication with another teledataphone, without requiring the services of a central server, of a centralized interface board, or of a central telephone switching system.

In summary, the teledataphone can generate by itself all necessary signaling IP packages to establish an IP telephone call with another teledataphone, without depending on a central telephone switching system, a central server or a centralized interface board, which operate as nexus, intermediary or concentrator, be all these equipment private or public.

The "voice" packages are sent and received towards and from another teledataphone in a direct way without going through a central server, centralized interface board or central telephone switching system ― be all these private or public ― which officiate as nexus, intermediary or concentrator, avoiding a double roundtrip way, understanding as going double way the one that goes from a subscriber A towards the central server, and from the latter towards a subscriber B; and return double way from the subscriber B towards the central server, and from the latter towards the subscriber A. The voice packages travel from A towards B in direct form, understood this one as a simple going way, and they return in the same way from B towards A, understood this one as simple return way. This important saving in the propagation time or latency diminishes the non-wished effect that the users are superposed and/or interrupt each other during the talk.

The IP protocol version used at the moment in Internet is number 4, or IPv4. When the technology migrates towards the new IPv6 version, the central server will no longer be used for addressing the subscribers, as each subscriber will have a fixed/static public IP address. In this case, the property of the teledataphone to generate by itself all necessary signaling IP packages to establish an IP telephone call with another teledataphone will take the maximal advantage.

The seen method to generate signaling packages is not only used for voice packages but also for video ones. Also, it is useful not only for teledataphones, but for any other device that accesses the Internet through fixed public IP addresses.

This device, either transmitter or receiver, which perform telephone calls and/or videoconferences between each other by accessing the Internet through fixed/static public IP addresses, in the Internet IPv4 version as well as in the IPv6, comprises means for generating by itself all necessary signaling IP packages to perform the communication, without depending on a central telephone switching system, a centralized interface board or central server, be all these publics or privates equipments; sending and receiving "voice" or "video" IP packages from the device to another one in a direct way without going through a central server, or centralized interface board, or central telephone switching system - either public or private - which acts as nexus, intermediary or concentrator, avoiding double roundtrip way, understanding as double going way the one that goes from a subscriber A towards the central server, and from the latter towards a subscriber B; and double return way from the subscriber B towards the central server, and from the latter towards the subscriber A. "voice" or "video" package propagates from A towards B in a direct way, understood this one as single going way, and they return in the same way from B towards A, understood this one as single return way. The devices generate the following communication signaling IP packages:
a. "transmitter ringing", generated by transmitter when it calls the receiver. This package is sent from transmitter towards the receiver in a periodical form every 4,5 seconds, it has TCP protocol, it is encrypted, and it is cancelled when the transmitter itself generates the "transmitter ringing end" package or when the transmitter receives from the receiver the "receiver attention" package. The receiver device, when decodes this IP package, emits a ringing bell during 1,5 seconds and remains in silence until the arrival of the next "transmitter ringing" package, that is, with an estimated cadence of 1,5 sound seconds / 3,0 silence seconds,
b. "receiver ringing", generated by the receiver to inform to the transmitter that the receiver teledataphone is ringing waiting for attendance. This package is sent from the receiver to the transmitter in a periodical form every 4,5 seconds, it has TCP protocol, it is encrypted, and it is cancelled after being sent for more than 2 minutes, or when the receiver receives from the transmitter the "transmitter ringing end" package, or when the receiver itself generates the "receiver attention" package. The transmitter device, when decodes this IP package, generates a call tone of frequency 425 +/- 15 Hertz that the transmitter user listens in his/her loudspeaker or handset with an estimated cadence of 1,5 sound seconds / 3,0 silence seconds,
c. busy, generated by the receiver to inform to the transmitter that there is in course a telephone call or videoconference. This package is sent from the receiver to the transmitter in a periodical form every 1,5 seconds, it has TCP protocol, it is encrypted, and it is cancelled after being sent for more than 2 minutes, or when the receiver ends its present communication, or when it receives from the transmitter the "transmitter ringing end" package. The transmitter device, when decodes this IP package, generates a busy tone of frequency 425 +/- 15 Hertz that the transmitter user listens in his/her loudspeaker or handset with an estimated cadence of 0,75 sound seconds / 0,75 silence seconds,
d. "receiver attention", generated by the receiver when it takes care of the telephone call or videoconference that the transmitter sends to him. This package is sent from the receiver to the transmitter, it has TCP protocol, is encrypted and cancels the sending of the "receiver ringing" package. When the transmitter receives it, it cancels the sending of the "transmitter ringing" package,
e. "transmitter ringing end", generated by the transmitter when decides by itself to leave its attempt to communicate with the receiver, or after having been calling the receiver for more than 2 minutes. This package is sent from the transmitter to the receiver, it has TCP protocol, is encrypted and cancels the sending of the "receiver ringing" or "busy" packages by the receiver, and the "transmitter ringing" package by the transmitter,
f. "destiny ports", generated by the receiver after having sent the package "receiving attention", in order to inform to the transmitter the UDP ports values that the receiver will use to send and to receive voice or video packages. This package is sent from the receiver to the transmitter, it has TCP protocol and it is encrypted,
g. "origin ports", generated by the transmitter when it has received from the receiver the "receiving attention" package, in order to inform to the receiver the UDP ports values that the transmitter will use to send and to receive the voice or video packages. This package is sent from the transmitter to the receiver, it has TCP protocol and it is encrypted,
h. "cut", generated by any of the two subscribers, transmitter or receiver, when they decide to cut IP telephone communications or videoconference. The package has TCP protocol, it is encrypted, and it is sent from one user to the other to inform that it has finalized the communication and it has released UDP ports,
i. "destiny user not reached", this signal is not in fact an IP package that propagates through Internet, but a signal that generates the transmitter itself when does not receive any answer after being sending a "transmitter ringing" package for a period greater than 10 or 15 seconds, or after being sending for more than 2 minutes the "transmitter ringing" package towards a receiver that continuously responds with the "receiver ringing" package. It is interpreted that the receiver has a transitory congestion problem caused by the added value ISP to which it is connected, or that it has recently changed its dynamic IP address and was not able yet to register it in the central server. The transmitter listens in its handset a tone of frequency of 425 +/-15 Hertz whose estimated cadence is 0,2 sound seconds / 0,3 silence seconds,
j. "dead line", generated both by the transmitter and the receiver. As mentioned above, this signal is not an IP package that travels by Internet, but it is generated when the teledataphone does not access the Internet, or after having cut a communication and maintained the handset without hanging for more than 5 seconds. The user, transmitter or receiver, listens to a tone of frequency of 425 +/-15 Hertz whose estimated cadence is 0,2 sound seconds / 0,3 silence seconds.
k. "destiny user not registered", generated by the transmitter when it does not find the receiver IP address, after having sent the "transmitter ringing" package. The transmitter generates a tone of an increasing frequency from 950 to 1.800 Hertz, in three successive and contiguous steps of 950, 1.400 and 1.800 Hertz, with 333 mseg. of duration each one, being in an estimated cadence of 1 second sound / 1 silence seconds.

IP Telephone Call

The procedure in which the subscriber 1 communicates with subscriber 3 (see Figure 4), when both are connected with their teledataphones through variable/dynamic public IP addresses is the following:
a. subscriber 1 asks for IP line pressing the "Called" command key, then he/she dials the telephone number or the alphanumeric code of the receiver and finally presses again the "Called" key. When the subscriber has pressed for the first time the "Called" key to ask for IP line, he/she listens to a continuous tone of frequency 425 +/- 15 Hertz. When it presses the key for the second time, he/she does not listen to this tone any more,
b. the teledataphone of subscriber 1 sends to the central server a signaling IP "transmitter call request" package, informing the destiny subscriber identification,
c. the central server executes the following tasks:
   i. it verifies that subscriber 3 is registered in the network,
   ii. if subscriber 3 is not registered, sends to the subscriber 1 the IP "destiny user not registered" package. The transmitter teledataphone, when decodes this package, generates a tone of an increasing frequency from 950 to 1.800 Hertz, in three successive and contiguous steps of 950, 1.400 and 1.800 Hertz, with 333 mseg. of duration each one, being in an estimated cadence from 1 second sound / 0,5 silence seconds,
   iii. if subscriber 3 is registered, the central server sends: i) to the subscriber 1 the IP signaling "transmitter call answer" package containing the public and private IP addresses of the teledataphone of subscriber 3, in this case and following the example seen, 80.XXYY.ZZ and 192.168.1.254, ii) to subscriber 3 the signaling IP "incoming call request" package with the same information but corresponding to subscriber 1, that is, 200.XXYY.ZZ and 192.168.1.254,
d. once the central server has put the subscribers in contact with each other, it releases the channel, so that the communication now follows the process 46 according with Figure 4. That is, the subscribers know their respective public and private IP addresses without the central server intervention,
e. the conditions are given so it is able to settle down the normal process of telephone signaling between both teledataphones subscribers without the central server intervention:
   i. subscriber 1 sends to subscriber 3 the "transmitter ringing" package in a periodical form every 4,5 seconds,
   ii. if subscriber 3 is communicating by IP with any other subscriber, the "busy" package sends to the subscriber 1. User 1 listens to in his/her handset a busy tone of frequency 425 +/- 15 Hertz with an estimated cadence of 0,75 sound seconds / 0,75 silence seconds,
   iii. after two minutes, or when subscriber 1 hangs handset, the periodic sending of the "transmitter ringing" package is cancelled, and the "transmitter ringing end" package is sent, which in turns cancels the "busy" package,
   iv. if user 3 is free, subscriber 1 receives a "receiver ringing" package that informs that the subscriber 3 teledataphone is ringing waiting for attendance. User 1 listens to in his/her handset a call tone of frequency 425 +/- 15 Hertz with an estimated cadence of 1,5 sound seconds / 3,0 silence seconds,
   v. after 2 minutes, or when user 1 hangs the handset, the periodic sending of the "transmitter ringing" package is cancelled, and the "transmitter ringing end" package is sent, which in turns cancels the "receiver ringing" package,
   vi. when user 3 attends, it sends to the subscriber 1 the "receiver attention" package and cancels the periodic sending of the "receiver ringing" package,
   vii. when subscriber 1 receives the "receiver attention" package cancels the periodic sending of the "transmitter ringing" package,
f. both subscribers have made the previous signaling to identify themselves and to accept the communication. The packages "origin ports" and "destiny ports" are sent between each other to mutually inquire the UDP ports values through which the subscribers will exchange voice packages to speak,
g. UDP ports are enabled,
h. when any of both cut the communications, an instantaneous IP "cut" package is generated and sent from one subscriber to the other. The subscriber who receives the first "cut" package no longer emits his/her own "cut" package as it does not have any sense to do it,
i. ports UDP are disabled,
j. the call has completely finalized.

A new telephone call between both teledataphones will follow the complete process above described in points 'a' to 'j'.

If teledataphones were connected to Internet through static/fixed public IP addresses, steps above described 'b', 'c', and 'd' were not necessary. This point reminds the very interesting teledataphone characteristic of being able to establish corresponding IP telephone signaling without need of external aid.

One of the most common forms to access the broadband Internet is through ADSL by means of using the conventional telephonically wire net. As the teledataphone can access the Internet through different technologies, it is not naturally a requirement that a user has conventional telephone to settle down IP telephone calls. That is, the teledataphone allows sending and receiving IP telephone calls towards and from any place of the world for any user who has Internet access, whether through conventional telephony wire net or not.

IP telephone call with previous check

It was already seen that if a subscriber changes any of the private teledataphone addresses, from both the router or the IP telephone, he/she must be registered again.

In this case, all those subscribers who had their data stored in their own teledataphones would not be able to locate it, because, as seen, the packages "transmitter call request", "transmitter call answer" and "incoming call request" are not generated when IP telephone calls are made between stored subscribers with fixed IP addresses. When any subscriber tries to call this subscriber, it receives the "destiny user not reached" package.

Having received this package, the transmitter user must carry out an IP telephone call with previous check, that is, a call that initially looks up into the central server the private IP addresses of the receiver.

In order to attend this type of calls, the subscriber presses first the "Switch Mode" command key and then the "Direct Called" key, which opens a simple self-guidance menu in the display. See Constructive Aspects.

Dual Call

The teledataphone allows carrying out two simultaneous telephone calls, one by IP telephony and another one by conventional telephony.

With the configuration keys, or by means of a computer connected to teledataphone, the operation mode can be selected: a) unique, b) dual.

In the "unique" mode, the teledataphone accepts a single call. If the user is speaking by telephone, either by IP or conventional telephony, and it receives a new call, he/she will send the busy signal IP package, or emit the busy tone.

In the "dual" mode, the teledataphone accepts a conventional call if it is speaking by IP telephony, or an IP call if it is speaking by conventional telephony. In both cases, the subscriber must press the "wait" command key to accept the new call. In order to exchange between conventional or IP telephony, the subscriber must press alternative and successively the "wait" button.

This "dual" option will allow the user to carry out conferences, in where 3 people speak in simultaneous way, or transferences where a remote user accesses to another remote user through the local subscriber who puts both them in contact. The local subscriber settles down an IP communication with one remote user, and a conventional communication with the other.

Proprietary encryption

The way in which the teledataphone can minimize the necessary bandwidth to establish IP telephone calls is that the data package that contains "code voice" (or simply voice package) be as small as possible. These packages are transmitted in the network with the UDP protocol.

For performing it, the teledataphone has a board or specific electronic chip that generates a proprietary encryption of voice packages, either incoming or out comings, which allows reducing the bandwidth for IP telephone calls accomplishment. This encryption method is based on not adding bits to the original voice package, but in rearranging them with a 256 bits-secret code and a encryption algorithm. The transmitter teledataphone codifies the original voice package or package 0, generating a new code voice package or package 1 of the same size that the former one. The receiver teledataphone takes the code package or package 1 and decodes it to reconstruct the original package or package 0. Both teledataphones have the 256 bits-secret code as well as the encryption algorithm embedded in the board or specific electronic chip.

In order to increase the transmission confidentiality and security, the central server modifies in a periodical form the 256 bits-secret code for voice packages encryption, either incoming or out comings. The new secret code is informed to the teledataphone when it is periodically registered, when the teledataphone carries out one IP call, or when the server by itself sends a general warning message. Furthermore, the 256 bits-secret code is inserted within a block of 'x' bits, where 'x' is greater than 256.

The procedures to inform the new secret code to each registered teledataphone are:
a. central server warning,
   i. the central server sends a general broadcasting message to all the teledataphones with fixed/static public IP address, asking them to be registered,
   ii. the teledataphones update the new secret code while registering,
   iii. the central server updates its own data base detailing whether individual subscribers have the modified secret code or not,
   iv. if a subscriber were disconnected of Internet at the moment at which the central server sends the general warning, it will update the new secret code when it is registered again, which it is in turn performed so far it reconnects to Internet,
b. periodical registries,
   i. the teledataphones with variable IP address will update their new secret code when they are registered in the central server. Providing there is no traffic congestion, the maximal time interval in which the teledataphone will have its secret code non-updated will be 40 seconds,
   ii. the teledataphones with fixed IP address also will update their new secret code when they are registered in the central server,
   iii. the central server updates its own data base detailing whether individual subscribers have the modified secret code or not,
   iv. in analogous way to the previous case, a subscriber who was disconnected of Internet will update the new secret code when he/she registers himself/herself again,
c. telephone call,
   i. if the central server receives a "transmitter call request" package for a certain receiver, and it detects in its database that some of the subscribers, transmitter and/or receiver, have not updated still the secret code, it will send to one of both of them - to which corresponds - the secret code before sending the packages "transmitter call answer" and/or "incoming call request".

Normally the teledataphones updates the new secret code when they are periodically registered or when the central server ask them to be registered if they have fixed IP address. In any case, the central server has in its database an identifier that informs whether the teledataphone has the new secret code or not. In very few cases, they will know it when they send or receive an IP telephone call.

The central server should be dimensioned so as the secret code updated process lasts the smaller possible time. A good dimensioned central server updates between 5.000 and 12.000 teledataphones per second. Generally, the processes of secret code update do not take place during rush hours but in valley hours.

In summary, an important characteristic of the board or specific electronic chip of the teledataphone consists of allowing that the central server updates into the teledataphone, in a periodical way and through Internet, the 256 bits-secret code corresponding to the encryption algorithm. In order to increase more the confidentiality and encryption security, the 256 bits-secret code is inserted within a block of 'x' bits, where 'x' is greater than 256.

li is reminded that all the registry processes take place with existing or traditional encryption algorithms that add bits or bytes to the original IP package. Several protocols of this type exist, like for example the IPSec in Transport way with ESP (Encapsulating Security Payload) algorithm.

The teledataphone processes then both algorithms: the traditionals or existing ones, when communicating with the central server to carry out permanent, temporary and/or periodical registry processes, or when communicating with another teledataphone to send or receive IP signaling packages; and the proprietary, when sending and receiving IP voice packages with another teledataphone.

IP Packages exchanged between the central server and the teledataphone, and exchanged signaling IP packages between teledataphones are encrypted with existing or traditional methods present in the market. Voice IP Packages exchanged between teledataphones are encrypted with a proprietary method.

Proprietary encryption method

The proprietary encryption algorithm is divided in two parts:

The first part consists of sending each successive bit of an original package of 'n' bits to the first free position to the right beginning from position '1' or first one, if each successive bit of the secret code is equal to the value 0; or sending it to the first free position to the left of the last position 'n' or last one, if each successive bit of the secret code is equal to the value 1. If the first bit of the secret code is equal to the value 1, the first bit of the original package changes its position to locate in the position 'n'; whereas if the first bit of the secret code is equal to the value 0, the first bit of original package conserves its original position '1'. If the second bit of the secret code is equal to the value 1, the second bit of the original package is moved to the first free position to the left of the final position, which could be position 'n' or position 'n-1' depending on the first bit of the secret code. If the second bit of the secret code is equal to the value 0, the second bit of original package is moved to the first free position to the right of the starting point, which could be position '1' or '2' depending on the first bit of the secret code. In analogous way it is done for the remaining bits.

The original package corresponds to the user data, without considering IP, TCP, UDP or ECP headers, that is, the header and routing information is no encrypted. Only user data are encrypted.

The second part consists of choosing in which position of a block of 'n' bits, where 'n' is greater than 256, the inserted 256 bits-secret code begins.

Example

Be the following original data package of 16 bits: 1001 1101 1011 0000. If it is numbered the bits from the left, bit '1' corresponds to the first bit, in this case of value 1 and bit '16' corresponds to the last bit of value 0.

In the same way be a secret code of 16 bits inserted in a block of 24 bits: 1111 0100 1100 **1101 1001** 0000. The secret code is bold emphasized. It is reminded that the secret code is of 256 bits, but an example of only 16 bits sets out to simplify the explanation of the proprietary encryption process.

Package encrypted would be like this:
a. the first bit of the secret code has a 0 value. So, the position of the first bit of the original package is sent to the position '1', that it is the first free position to the left,
b. the second bit of the secret code has a 1 value. So, the position of the second bit of the original package is sent to the position '16', that it is the first free position to the right,
c. the third bit of the secret code has a 0 value. So, the position of the third bit of the original package is sent to the position '2', then the '1' position is already occupied, and the first free position to the left is '2',
d. the fourth bit of the secret code has a 0 value. So, the position of the fourth bit of the original package is sent to the position '3', then the '2' position is already occupied, being the '3' position the first free position to the left,
e. the fifth bit of the secret code has a 1 value. So, the position of the fifth bit of the original package is sent to the position '15', then the '16' position is already occupied, being the '15' position the first free position to the right,
f. the sixth bit of the secret code has a 1 value. So, the position of the sixth bit of the original package is sent to the position '14', then the '15' position is already occupied, being the '14' position the first free position to the right,
g. in analogous form, it follows with the remaining bits.

Finally, step by step, it comes the encrypted package:

Differences are seen in the following table:

| **PACKAGE** | **VALUE** | **SECRET CODE** | **VALUE** |
|---|---|---|---|
| Original | **1001 1101 1011 0010** | | |
| Encrypted 1 | 1010 1101 0010 1110 | Secret code 1 | 0100 1100 1101 1001 |
| Encrypted 2 | 1001 0001 0111 1001 | Secret code 2 | 1111 0101 1100 0010 |
| Encrypted 3 | 1101 0010 1101 1001 | Secret code 3 | 1111 0000 1111 0000 |

This encryption algorithm is absolutely generic and it is not only applied to voice IP packages, but it can be used with IP packages of data, video, signaling, etc. It even can be applied to data user packages that do not have IP protocol.

Also, it is valid not only for teledataphones, but also for any two devices, which exchange any type of information, and by means of any protocol.

Then, this encryption method of data, voice, signaling or video information packages, of any protocol, exchanged between two or more any type of devices, comprises means for not adding bits to the original package, either data, voice, signaling or video one, but by rearranging them with an encryption algorithm and a 256 bits-secret code in a new package of the same size that the original package. The encryption algorithm consists of positioning each successive bit of the original package of 'n' bits in the first free position to the right beginning from position '1' or first, if each successive bit of the secret code is equal to the value 0; or positioning it in the first free position to the left from the position 'n' or last position, if each successive bit of the secret code is equal to the value 1. This coding method does not modify the routing and heading package information, it is valid for two any devices, which exchange any type of information, and by means of any protocol type.

Furthermore the proprietary 256 bits-secret code is modified and/or updated with a periodicity defined by a central server, being this secret code communicated to the different subscribers through packages encrypted with traditional methods that add bits to the original package. The method comprises means for increasing the encryption confidentiality and security, by inserting the proprietary 256 bits-secret code within a block of 'x' bits, where 'x' is greater than 256.

Dynamic Priorization

Whenever voice and data packages coexist with each other simultaneously, a priorization policy must be settled down. It does not represent any problem if a data package, for example an e-mail, is delayed one or two seconds in being received. It does not happen the same with voice packages, since they operate in real time. If voice and data packages are mixed together, the "voice" is interrupted to the point that the telephone communication becomes impossible. "Voice" packages, therefore, must have priority with respect of "data" ones.

The integrated router inside the teledataphone has a method of dynamic priorization, this is, a mechanism by which the data packages effective bandwidth is reduced if and only if it attends simultaneously "voice" or "signaling" packages. This is performed in the following way:
a. initial signaling. According to the telephone IP call section previously explained, the signaling process is the first point to be settled down from one user to another. For this task there is not any priorization done, as the communication has not been established yet,
b. communication. At the moment that the communication session has been settled down between subscribers 1 and 3, that is, when both teledataphones begin to exchange UDP packages, they prioritizes "voice" and some "signaling" packages in the following way:
   i. releasing the package queues for quickly exhausting all data packages being exchanged at the moment of settling down the IP telephone call. At the moment in which the communication is settled down, a maximum of 10 kbps bandwidth during 500 mseg is assigned at every IP package that does not come from known ports and public IP addresses, understanding as known ports and public IP addresses those which correspond to the interlocutor which carries out a voice session located in the other remote end. In this example, the teledataphone of subscriber 1 minimizes the bandwidth for every IP package that does not come from the public address 80.XX.YY.ZZ and private 192.168.1.254 ZZ (subscriber 3). Analogous, the teledataphone of subscriber 3 will do the same for every IP package that does not come from public direction 200.XXYY.ZZ and private 192.168.1.254 (subscriber 1),
   ii. shooting timers in successive form one after another every 2 seconds as long as voice or signaling packages from known ports and public IP addresses continue arriving,
   iii. setting up a bandwidth for the in-course telephone call, that is, for all those packages that come from known ports and public IP addresses, and a remaining bandwidth for data, that is, for all those packages that do not come from known ports and public IP addresses, during the time in which the timer is active, understanding as remaining bandwidth the one which results from subtracting the IP call bandwidth from the effective bandwidth,
   iv. the IP telephone call bandwidth, composed by voice and/or signaling packages, is enough reduced thanks to the proprietary encryption method that the teledataphones have. Its rank is between 20 to 37 kbps,
   v. finally, again assigning the 100% of the effective bandwidth to the traffic data when the signaling "cut" package arrives to any of them, or when voice packages do not arrive during a time greater than 30 seconds from known ports and IP addresses.

In summary, the teledataphone allows prioritizing the voice communications against the traffic data when the subscriber attends one IP telephone call and, in simultaneous way, his/her computer or computers network navigate the Internet.

The dynamic priorization method is valid not only for teledataphones but also for any other device that accesses the Internet to carry out telephone calls and/or videoconference.

This method to prioritizes in a dynamic way the voice or video communications against the traffic data when a user attends one telephone call and/or a videoconference through an Internet connected device, and in simultaneous form, navigates the Internet from his/her computer or computers network, comprises:
a. releasing the package queues for quickly exhausting all data packages being exchanged at the moment of settling down the IP telephone call or videoconference. At the moment in which the communication is settled down, a maximum of 10 kbps bandwidth during 500 mseg is assigned at every IP package that does not come from known ports and public IP addresses, understanding as known ports and public IP addresses those which correspond to the interlocutor which carries out a voice or videoconference session located in the other remote end,
b. shooting timers in successive form one after another every 2 seconds as long as voice, video or some signaling packages from known ports and public IP addresses continue arriving,
c. setting up a bandwidth for a voice or video communication, that is, for all those packages that come from known ports and public IP addresses, and a remaining bandwidth for data, that is, for all those packages that do not come from known ports and public IP addresses, during the time in which the timer is active, understanding as remaining bandwidth the one which results from subtracting the voice communication or videoconference bandwidth from the effective bandwidth,
d. assigning again the 100% of the effective bandwidth to the traffic data when the signaling "cut" package arrives to any of them, or when voice or video packages do not arrive during a time greater than 30 seconds from known ports and IP addresses.

Dial up Access

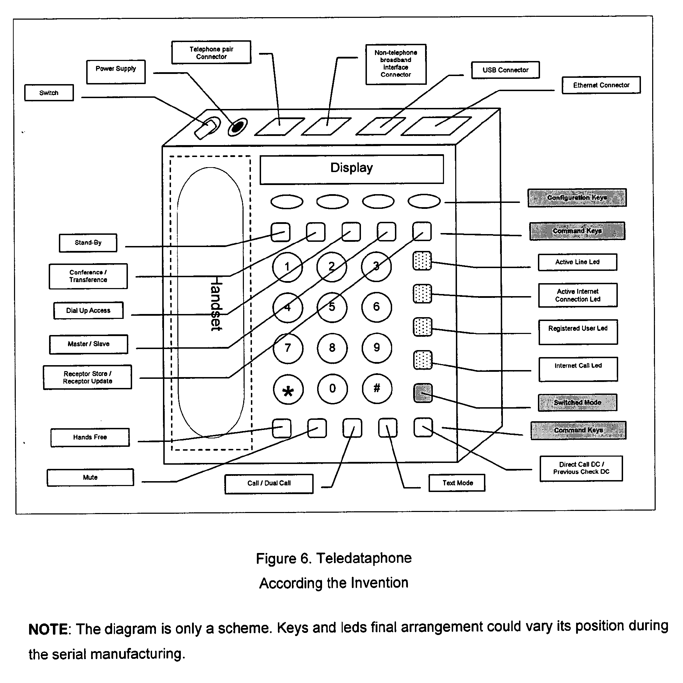

The teledataphone allows accessing the Internet through dial up way. Thanks to the reduced bandwidth that the teledataphone uses, it can attend one IP call by dial up. The necessary steps are:
a. the subscriber parameterizes the Internet dial up telephone number, through the corresponding configuration keys (see Figure 6) or through a computer connected to the teledataphone,
b. this number can be either from an Internet access supplier that charges a monthly fee, or from a Internet access supplier that charges only the telephone pulses without requiring a monthly fee,
c. pressing "Dial Up Access" command the teledataphone dials automatically the number selected in the first step, in order to access the Internet through Dial Up way,
d. once connected to Internet, the line is put on Stand-by by pressing the corresponding "wait" button. See Figure 6,
e. then it takes place the IP telephone call by dialling the destiny user number or its corresponding alphanumeric code. See IP telephone call Section,
f. pressing again the command "Dial Up Access", it is cut the Internet access,
g. a new direct dial up communication can be performed beginning in step 'b', unless the subscriber has moved to another new address.

This procedure allows, specially for the user who does not have Broadband, to carry out one national or international telephone call paying a local dial up Internet access. It is reminded that this Internet access method is charged by pulses or local minutes.

Another advantage is for the frequent traveller, who can transport the teledataphone to make telephone calls during staying in any place different from his/her habitual address, connecting the teledataphone to any telephone line (in a hotel, company, etc.), and accessing the Internet through Internet suppliers that charge consumed pulses. It will always be able to carry out national or international calls paying a local telephone cost.

It is a previous requisite that the user has carried out the temporary registry process to be able to perform Dial Up access function. When the user uses the teledataphone in this way, he/she will be registered in the central server with the alphanumeric code selected as temporary user.

In summary, the teledataphone can be connected to Internet through Dial Up access, registering itself with a temporary user alphanumeric code, then enabling both carrying out national or international telephone calls paying the cost of local pulses, and simultaneously, navigating the Internet by means of a portable desktop computer.

Teledataphones Network

The small companies with only one telephone line can connect a maximum of up 4 teledataphones. One teledataphone per time is able to carry out one conventional telephone call. However the 4 teledataphones are able to carry out IP telephone calls in a simultaneous form. If the company had two telephone lines, it would be able to connect up to 8 teledataphones, 4 per line. In this case, they can attend up to 2 simultaneous conventional telephone calls and up to 8 simultaneous IP telephone calls. If one of the two arranged lines is reserved for fax, 3 teledataphones plus the fax equipment can connect in this line, and the remaining 4 teledataphones in the other line.

There are two alternatives to make these teledataphones to be registered:
a. by means of the subscriber international telephone number, in which case it is necessary to add an extension number to each teledataphone,
b. through the alphanumeric code, in which case it is not necessary to add any extension number.

In any case, it is necessary to register as a permanent user in a different way as described in the permanent user registry section.

It is supposed that two or more users (maximum 4) wish to register as permanent users with the subscriber international telephone number and the corresponding extension.

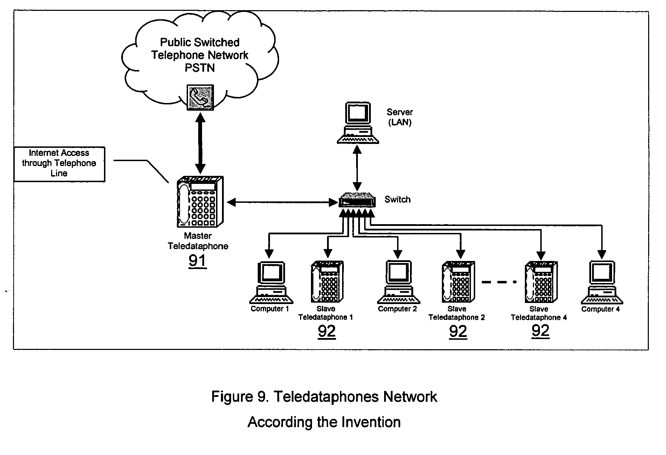

One teledataphone is connected to Internet, while the others are connected to the local area network switch. See Navigation by Internet Section and Figure 9. The architecture is master-slave, where the teledataphone connected to Internet assumes the master function, whereas the others are the slaves. There will be one master teledataphone by each Internet active connection.

The master user registers himself/herself in normal form excepting that the extension number must be added. The slaved users cannot register themselves until the master has not registered himself/herself, then they are not connected directly to Internet.

Master Registry

When the master user connects the teledataphone 91 to the telephone line, it is connected in a simultaneous way with both PSTN and Internet networks.

Once connected to Internet, it initiates its permanent registry process in the central server. The master registry process consists of the following steps:
a. the user press the "Master" key and assigns a 3 digits extension number,
b. the user manually introduces into the teledataphone the international telephone subscriber number. For example, 0054 (Argentine), 11 (Buenos Aires), and the remaining digits,
c. this operation also can be made through a computer linked to the teledataphone with neither additional software nor specific application, being able to use, for example, the HyperTerminal computer option,
d. the teledataphone informs to the user that is carrying out a "Permanent" Subscriber Registry,
e. the teledataphone requests confirmation to the user of the telephone number including the extension number, showing all the digits together, so that the user verifies to have entered the correct number,
f. in case that the user does not have fixed telephone, he/she must introduce a 7-digits alphanumeric code, with obligation of selecting letters from 'a' to 'z'. The teledataphone by itself adds the three digits corresponding with the extension number selected,
g. if the telephone number or alphanumeric code introduced by the user is already registered, the central server informs to the user that he/she must select a different one,
h. the user informs manually if he/she is connected through a fixed/static public IP address, or variable/dynamic IP address,
i. once finalized the data that the user must enter, the teledataphone, in totally automatic form and now without intervention of neither the user nor any other person, it sends to the central server:
   i. the international telephone subscriber number including the extension number or, in its defect, the alphanumeric code of the user,
   ii. the public IP address of the WAN that it has been assigned at that moment, both fixed/static and variable/dynamic,
   iii. an identifier package to inform to the central server whether the IP address is fixed or variable,
   iv. the private IP address of the LAN that it has been assigned. Its default value is 192.168.1.254, although the user can change it in a simple form if wished,
j. this permanent subscriber registry process takes place ensuring the confidentiality and integrity of the transmitted data, using existing protocols with encryption algorithms for Internet traffic. Several protocols of this type exist, like for example the IPSec in Transport way with ESP (Encapsulating Security Payload) algorithm,
k. these IP registry packages are made through TCP protocol, to ensure that the process has correctly taken place,
l. both the teledataphone and central server applications know the origin and destiny TCP ports.

The teledataphone has two private IP address in the LAN, then it acts as an Internet linked router and simultaneously as an IP telephone. The default private IP address router value is 192.168.1.1, while that of the IP telephone is 192.168.1.254.

This permanent subscriber registry process takes place by first and only one time, by means of user intervention, in any added value ISP company. In case that the subscriber must register again due to have himself/herself uncorrected registered, to have to modify his/her data, or to have changed the private IP addresses, he/she must enter the "Global Reset" option, explained more ahead. Also, when the master subscriber modifies any of the private IP addresses of its teledataphone, all slave teledataphones associated with it must be registered again.

Slave Registry

The slave user connects the teledataphone 92 to the LAN switch. The slave process registry consists of the following steps:
a. the user presses the "Slave" key and assigns a 3 digits extension number,
b. then presses one configuration key to modify the private IP telephone address. For example, assigns number 192.168.1.253,
c. it is not able to modify the private IP router address, as the router is deactivated,
d. the user manually introduces into the teledataphone the international telephone subscriber number. For example, 0054 (Argentine), 11 (Buenos Aires), and the remaining digits,
e. this operation also can be made through a computer linked to the teledataphone with neither additional software nor specific application, being able to use, for example, the HyperTerminal computer option,
f. the teledataphone informs to the user that is carrying out a "Permanent" Subscriber Registry,
g. the teledataphone requests confirmation to the user of the telephone number including the extension number, showing all the digits together, so that the user verifies to have entered the correct number,
h. in case that the user does not have fixed telephone, it must introduce a 7-digits alphanumeric code, with obligation of selecting letters from 'a' to 'z'. The teledataphone by itself adds the three digits corresponding with the extension number selected,
i. if the telephone number or alphanumeric code introduced by the user is already registered, the central server informs to the user that he/she must select a different one,
j. the user informs manually if he/she is connected through a fixed/static public IP address, or variable/dynamic IP address,
k. once finalized the data that the user must enter, the teledataphone, in totally automatic form and now without intervention of neither the user nor any other person, it sends to the central server:
   i. the international telephone subscriber number including the extension number or, in its defect, the alphanumeric code of the user,
   ii. the public IP address of the WAN that it has been assigned at that moment, both fixed/static and variable/dynamic,
   iii. an identifier package to inform to the central server whether the IP address is fixed or variable,
   iv. the private IP address of the LAN that it has been assigned. In this case, its value is 192.168.1.253,
l. this permanent subscriber registry process takes place ensuring the confidentiality and integrity of the transmitted data, using existing protocols with encryption algorithms for Internet traffic. Several protocols of this type exist, like for example the IPSec in Transport way with ESP (Encapsulating Security Payload) algorithm,
m. these IP registry packages are made through TCP protocol, to ensure that the process has correctly taken place,
n. both the teledataphone and central server applications know the origin and destiny TCP ports.

The slave teledataphone has only one private LAN IP address, as it acts only as IP telephone.

This permanent subscriber registry process takes place by first and only one time, by means of user intervention, in any added value ISP company. In case that the subscriber must register again due to have himself/herself uncorrected registered, to have to modify his/her data, or to have changed the private IP addresses, he/she must enter the "Global Reset" option, explained more ahead. Also, when the master subscriber modifies any of the private IP addresses of its teledataphone, all slave teledataphones associated with it must be registered again.

The teledataphones can then be interconnected within a local area network allowing that each subscriber, with his/her own teledataphone, carries out IP telephone calls and navigates the Internet in simultaneous form from his/her computer.

Constructive Format

Teledataphone Block Diagram

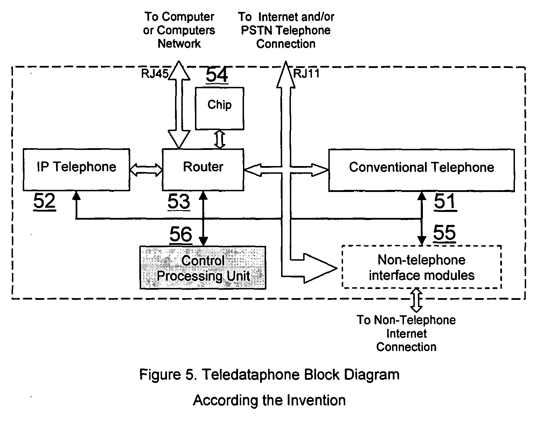

In Figure 5 a teledataphone blocks diagram is presented, whose components are:
a. a conventional telephone 51 for voice communications by the conventional PSTN net,
b. an IP telephone 52 for IP protocol telephone communications,
c. a router 53 for Internet access,
d. a chip or specific electronic board 54 for proprietary encryption packages,
e. an interface module 55 for non-telephone Internet access connections, supplied under request,
f. a processing control unit 56 for traffic management, features processing, and control of the interconnection between all the different modules.

The teledataphone constitutes a compact and integrated unit with: conventional telephone, IP telephone, router, board or chip for proprietary encryption method, control processing unit, and interface modules for non-telephone broadband Internet access.

Teledataphone Scheme

In the Figure 6 a teledataphone scheme shows the connectors, keys or buttons and leds or lamps functions:

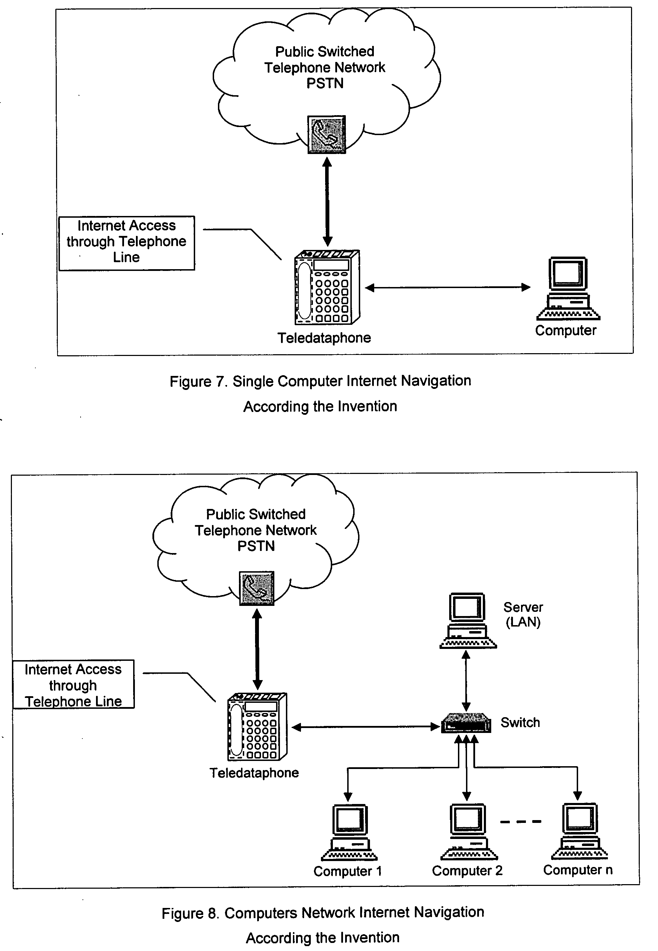

Connectors
a. the teledataphone has a standard telephone PSTN default connection. If the user has this Internet access type, it will not require additional connections,
b. in the case that he/she has other links Internet access, he/she will have to make use of the broadband for non-telephone interface connector. This type of alternative connections is supplied under request. The teledataphone does not come equipped with any specific connection,
c. USB connector applied for configuration (for example, the permanent or temporary user registry) and/or advanced programming (not at user level),
d. Ethernet connector applied either for configuration, advanced programming (not at user level), or connecting a computer or computers network. See Figures 7, 8 and 9.

Configuration Keys and/or Buttons
a. the configuration keys are based on a self-guidance menu type. They are useful for many functions like: a) permanent user registry configuration; b) temporary user registry configuration; c) bell volume adjustment; d) leds test; e) two simultaneous telephone calls (one through PSTN, the other through IP) enabling; f) telephone number Internet dial up access parameterization, g) private teledataphone IP addresses changes, h) configuration of the answer way of the teledataphone when it receives one conventional call while attending an IP call, and vice verse; it can be programmed to informs either busy or to take care of the second call pressing the corresponding button,
b. it is also possible to carry out advanced teledataphone programming, from a USB or Ethernet port connected computer (not at user level).

Leds or Lamps
a. the "Active Line" led is set on so far the teledataphone detects the telephone pair,
b. the "Active Internet Connection" led is set on so far the teledataphone has an active Internet connection, be by any access technology,
c. the "Registered User" led is set on so far the user is registered in the central server,
d. the "IP Call" is set on so far the subscriber is carrying out one IP telephone call.

Command Keys
a. the "Switch Mode" key allows using the same key for two different functions. If this button is pressed, the key will execute the second pre-programmed function,
b. the "Text Mode" key alternates between numbers and letters when the numbers from 0 to 9 are pressed,
c. the "Call" key is used for accessing IP line,
d. once accessed to IP line, the "Call" key must be pressed again after dialling the destiny number,
e. if after dialling destiny number and pressing the "Call" key, the receptor user does not have a teledataphone, the transmitter user will receive a "Destiny user not registered" message and the communication is cut,
f. if after dialling destiny number, the transmitter presses "Switch Mode" key and successively the "Call" key, the teledataphone executes a Dual Call. This means that the call is at first time performed through Internet; and in the case that the receiver does not have a teledataphone, a second PSTN way is tried automatically,
g. the "Mute" key inhibits the voice user transmission,
h. the "Hands Free" key allows dialling without raising the handset,
i. if the "Direct Call" (DC) key is pressed, the subscriber accesses to a simple self-guidance menu to call by IP telephony to any subscriber that the teledataphone already has in its memory. This call method does not generate packages exchanges with the central server, but the call is sent in a direct way towards the destiny user,
j. by Pressing "Switch Mode" and successively "DC" keys, it is performed an IP telephone call with previous public and private IP addresses check of the destiny user. This call generates previous information exchange with the central server,
k. the "Stand-by" key maintains an interlocutor waiting when two simultaneous calls are executed, one by PSTN and another by Internet,
l. the "Conference" key allows three persons to speak simultaneously. That is, if there is an IP call between subscribers A and B, and there is another standard PSTN call between subscribers A and C, pressing this button the three persons can speak to each other,
m. the "Transference" function transfers an IP call to a PSTN call and vice versa. For example, subscriber A speaks with subscriber B though Internet, while subscriber A speaks with user C through PSTN. Pressing the "Switch Mode" button, and successively "Conference" key, B and C will listen to each other but A becomes out of the conversation,
n. when pressing the "Dial up" key, the teledataphone calls to the number opportunely pre-programmed with the configuration keys or by means of a computer, and it accesses the Internet through the dial up access, that is, with narrow bandwidth. Pressing this button again, the connection is cut,
o. the "Master" key is used to register the teledataphone as a master of a teledataphones network,
p. by pressing the "Switch Mode" plus "Master" keys the teledataphone performs slave registry process of the slaves teledataphones network,
q. by pressing "Receptor Store" key it is accessed at a simple self-guidance menu to memorize a frequent receiver with fixed public IP address,
r. with the "Receptor Update" button, a transmitter teledataphone updates public and private IP addresses of a frequent receiver. This allows to later carrying out direct calls without passing through the central server,
s. in order to carry out Internet connection reset, the subscriber must press simultaneously the "Text Mode" and the "Dial up" key for more than two seconds. The teledataphone becomes disconnected and reinitiates Internet access,
t. if the subscriber presses the above mentioned buttons plus the # keys, all simultaneously, for more than two seconds, it is performed a Global Reset.
u. The power supply switch turns on and off the teledataphone. When the teledataphone reconnects, it is automatically linked to Internet and it initiates the periodic registry process (equivalent to a Connection Reset). The teledataphone does not lose the permanent and temporary registries data even during a power supply disconnection.

Internet Navigation

Internet Access

The teledataphone is able to communicate with all the Internet broadband access technologies: a) telephone pair, b) cable, c) optical fiber, d) microwaves, e) satellite link, f) electrical link, g) wireless connection.

The equipment brings by default only the connection for telephone access. For the remaining access types, diverse interface modules exist, one for each technology type, provided under request.

This allows configuring a teledataphone with one connection type and another with another connection one, mainly for those companies that have alternative Internet links with different technologies.

Interconnecting Schemes

Thanks to the proprietary encryption method that reduces the necessary bandwidth, and to a voice against data packages dynamic priorization, the teledataphone allows that a computer or computers network connected to its router can navigate the Internet in simultaneous form with either a conventional or an IP telephone communication, with the maximal quality service.

In the Figure 7 a schematic diagram appears in which a user accesses the Internet through a computer connected to the teledataphone. The subscriber communicates by telephone either by standard PSTN or by Internet and, in a simultaneous form, he/she navigates the Internet from its computer.

In the Figure 8 a similar scheme for a local area network or LAN that accesses the Internet through the teledataphone. A small home network of two or three computers without server is also able to access the Internet.

In the Figure 9, an interconnecting diagram shows a teledataphones network, where each subscriber navigates the Internet in simultaneous way with one IP telephone call.

General Data

Connection Reset

At any time, the subscriber can reset the Internet connection, without erasing the permanent registry data.

Global Reset

Through this option, the subscriber erases all the configuration parameters of the Permanent and Temporary User Registries and of internal private IP addresses, taking the teledataphone to its original factory values. The Global Reset erases all the parameters programmed by the user, and returns the teledataphone to its original default values.

Serial manufacturing

The teledataphone has naturally industrial application and series development. Any person, company or shop can have this device, which allows making low cost telephone communications as well as navigating by Internet.

Technical Specifications
a. Temperature operation: 0° to 40° C (32° to 102° F).
b. Temperature storage: -20° to 60°C (-4° to 140°F),
c. Relative humidity operation: 10 to 90% @ 40° C (102 °F), without condensation.
d. Relative humidity storage: 0 to 95% @ 50°C (122°F), without condensation.
e. Maximal vibration operation: 0,20 G for frequencies between 3 and 200 Hertz during 20 min.
f. Maximal Vibration storage: 0.40 G for frequencies between 3 and 200 Hertz during 20 min.
g. Impact in operation: average sine wave: 30 G during 2 mseg.
h. Impact in storage: average sine wave: 60 G during 2 mseg.
i. Maximal altitude operation: 3048 meters (10.000 feet)
j. Maximal altitude storage: 10.600 meters (35,000 feet)
k. Power supply: external alternating current adapter, universal input voltage 90-264 V and single-phase frequency 47-63Hz, power between 30 and 60 watts.

## Claims

1. And apparatus, so-called teledataphone, for integrated and simultaneous voice and data communication with all the hardware components, programs and necessary interface modules to provide voice communications sending and receiving either audio signals through PSTN, or IP packages through Internet, the teledataphone comprises:
a. a compact and integrated unit with: conventional standard telephone, IP telephone, router, board or chip for proprietary package data encryption, control processing unit, and interface modules for non-telephonically broadband internet access technologies;
b. means for enabling that a single computer or computers network linked to the router could navigate the Internet in simultaneous way with a conventional or IP telephone call;
c. means for generating by itself all the signaling IP packages necessary to set up an IP telephone call with another teledataphone, without depending on a central telephone switching system, or central server, or central interface board which officiate as nexus, intermediary or concentrator, be all these equipment either public or private;
d. means for sending and receiving IP telephone calls towards and from any place of the world without being captive from a unique central server but registering itself like a subscriber on an added value ISP company;
e. means for interconnecting into a LAN enabling each of the subscribers, with his/her own teledataphones, making IP telephone calls and in simultaneous way navigating the Internet from his/her computer.

2. The teledataphone of claim 1, wherein the teledataphone comprises:
a. a board or specific electronic chip that generates a proprietary encryption of voice packages, either incoming or out comings, reducing the bandwidth for IP telephone calls accomplishment by means of not adding bits to the original voice package, but of rearranging them, with an embedded encryption algorithm and an also embedded 256 bits-secret code, in a new package of the same size that the original package;
b. means for codifying the original voice package or package 0, generating a new code voice package or package 1 of the same size that the former one; the remote end teledataphone takes the code package or package 1 and decodes it to reconstruct the original package or package 0;
c. means for performing its encryption algorithm by positioning each successive bit of the original package of 'n' bits in the first free position to the right beginning from position '1' or first, if each successive bit of the secret code is equal to the value 0; or positioning it in the first free position to the left from the position 'n' or last position, if each successive bit of the secret code is equal to the value 1.

3. The teledataphone of claims 1 and 2, wherein the teledataphone comprises:
a. means for updating the 256 bits-secret code corresponding to the encryption algorithm embedded in the board or specific electronic chip by the central server, in a periodical way and through Internet;
b. means for increasing the confidentiality and encryption security, by inserting the 256 bits-secret code within a block of 'x' bits, where 'x' is greater than 256.

4. The teledataphone of claim 1, wherein the teledataphone comprises means for sending and receiving "voice" packages to and from another teledataphone in a direct way without going through a central server, centralized interface board or central telephone switching system - be all these private or public - which officiate as nexus, intermediary or concentrator, avoiding a double roundtrip way, understanding as going double way the one that goes from a subscriber A towards the central server, and from the latter towards a subscriber B; and return double way from the subscriber B towards the central server, and from the latter towards the subscriber A; the voice packages travel from A towards B in direct form, understood this one as a simple going way, and they return in the same way from B towards A, understood this one as simple return way.

5. The teledataphone of claim 1, wherein the teledataphone comprises means for sending and receiving IP telephone calls towards and from any place of the world for any user who has Internet access, whether through conventional telephony wire net or not.

6. The teledataphone of claim 1, wherein the teledataphone comprises a Global Reset that erases all the parameters programmed by the user, and returns the teledataphone to its original default values.

7. The teledataphone of claim 1, wherein the teledataphone comprises means for registering itself by first and only one time, by means of user intervention, as permanent and temporal subscriber in any added value ISP company.

8. The teledataphone of claim 1, wherein the teledataphone comprises means for periodically registering itself as subscriber in the central server in an automatic form, without knowledge or possible intervention of any person, and independently of his/her actions, and at regular intervals between 10 and 40 seconds when it is linked to Internet through variable/dynamic public IP address and between 12 and 24 hours when linked through fixed/static public IP address.

9. The teledataphone of claims 1 and 8, wherein the teledataphone is periodically registered using the international unified telephone numeration and/or using an own alphanumeric code.

10. The teledataphone of claims 1 and 8, wherein the teledataphone comprises means for avoiding unnecessary data packages traffic due to periodical registry process when there is an IP telephone call in course.

11. The teledataphone of claims 1 and 8, wherein the teledataphone is registered without knowing the public IP address to which the user is connected.

12. The teledataphone of claims 1 and 8, wherein the teledataphone comprises means for functioning with subscribers whose Internet connection has either a fixed/static or a variable/dynamic IP address.

13. The teledataphone of claim 1, wherein the teledataphone comprises means for prioritizing the voice communications against the traffic data when the subscriber attends one IP telephone call and, in simultaneous way, his/her computer or computers network navigate the Internet.

14. The teledataphone of claim 1, wherein the teledataphone is connected to Internet through Dial Up access, registering itself with a temporary user alphanumeric code, then enabling both carrying out national or international telephone calls paying the cost of local pulses, and simultaneously, navigating the Internet by means of a portable desktop computer.

15. A method of data, voice, signaling or video information packages encryption, of any protocol, exchanged between two or more any type of devices, the method comprises means for:
a. not adding bits to the original package, either data, voice, signaling or video ones, but by rearranging them with an encryption algorithm and a 256 bits-secret code in a new package of the same size that the original package;
b. performing its encryption algorithm by positioning each successive bit of the original package of 'n' bits in the first free position to the right beginning from position '1' or first, if each successive bit of the secret code is equal to the value 0; or positioning it in the first free position to the left from the position 'n' or last position, if each successive bit of the secret code is equal to the value 1;
c. updating the 256 bits-secret code with a periodicity defined by a central server, being this secret code communicated to the different subscribers through packages encrypted with traditional methods that add bits to the original package;
d. increasing the confidentiality and encryption security, by inserting the 256 bits-secret code within a block of 'x' bits, where 'x' is greater than 256.

16. A method of claim 15, wherein the coding method does not modify the routing and heading package information, it is valid for two any devices, which exchange any type of information, and by means of any protocol type.

17. A device, either transmitters or receivers, to perform telephone calls and/or videoconferences between each others by accessing the Internet through fixed/static public IP addresses, in the Internet IPv4 version as well as in the lPv6, the device comprises means for:
a. generating by itself all necessary signaling IP packages to perform the communication, without depending on a central telephone switching system, a centralized interface board or central server, be all these publics or privates equipments;
b. sending and receiving "voice" or "video" IP packages from the device to another one in a direct way without going through a central server, or centralized interface board, or central telephone switching system ― either public or private ― which acts as nexus, intermediary or concentrator, avoiding double roundtrip way, understanding as double going way the one that goes from a subscriber A towards the central server, and from the latter towards a subscriber B; and double return way from the subscriber B towards the central server, and from the latter towards the subscriber A; "voice" or "video" package propagates from A towards B in a direct way, understood this one as single going way, and they return in the same way from B towards A, understood this one as single return way;
c. generating the following communication signalling IP packages:
• "transmitter ringing", generated by transmitter when it calls the receiver; this package is sent from transmitter towards the receiver in a periodical form every 4,5 seconds, it has TCP protocol, it is encrypted, and it is cancelled when the transmitter itself generates the "transmitter ringing end" package or when the transmitter receives from the receiver the "receiver attention" package; the receiver device, when decodes this IP package, emits a ringing bell during 1,5 seconds and remains in silence until the arrival of the next "transmitter ringing" package, that is, with an estimated cadence of 1,5 sound seconds / 3,0 silence seconds;
• "receiver ringing", generated by the receiver to inform to the transmitter that the • receiver teledataphone is ringing waiting for attendance; this package is sent from the receiver to the transmitter in a periodical form every 4,5 seconds, it has TCP protocol, it is encrypted, and it is cancelled after being sent for more than 2 minutes, or when the receiver receives from the transmitter the "transmitter ringing end" package, or when the receiver itself generates the "receiver attention" package; the transmitter device, when decodes this IP package, generates a call tone of frequency 425 +/- 15 Hertz that the transmitter user listens in his/her loudspeaker or handset with an estimated cadence of 1,5 sound seconds / 3,0 silence seconds;
• busy, generated by the receiver to inform to the transmitter that there is in course a telephone call or videoconference; this package is sent from the receiver to the transmitter in a periodical form every 1,5 seconds, it has TCP protocol, it is encrypted, and it is cancelled after being sent for more than 2 minutes, or when the receiver ends its present communication, or when it receives from the transmitter the "transmitter ringing end" package; the transmitter device, when decodes this IP package, generates a busy tone of frequency 425 +/- 15 Hertz that the transmitter user listens in his/her loudspeaker or handset with an estimated cadence of 0,75 sound seconds / 0,75 silence seconds;
• "receiver attention", generated by the receiver when it takes care of the telephone call or videoconference that the transmitter sends to him; this package is sent from the receiver to the transmitter, it has TCP protocol, is encrypted and cancels the sending of the "receiver ringing" package; when the transmitter receives it, it cancels the sending of the "transmitter ringing" package;
• "transmitter ringing end", generated by the transmitter when decides by itself to leave its attempt to communicate with the receiver, or after having been calling the receiver for more than 2 minutes; this package is sent from the transmitter to the receiver, it has TCP protocol, is encrypted and cancels the sending of the "receiver ringing" or "busy" packages by the receiver, and the "transmitter ringing" package by the transmitter;
• "destiny ports", generated by the receiver after having sent the package "receiving • attention", in order to inform to the transmitter the UDP ports values that the receiver will use to send and to receive voice or video packages; this package is sent from the receiver to the transmitter, it has TCP protocol and it is encrypted;
• "origin ports", generated by the transmitter when it has received from the receiver the "receiving attention" package, in order to inform to the receiver the UDP ports values that the transmitter will use to send and to receive the voice or video packages; this package is sent from the transmitter to the receiver, it has TCP protocol and it is encrypted;
• "cut", generated by any of the two subscribers, transmitter or receiver, when they decide to cut IP telephone communications or videoconference; the package has TCP protocol, it is encrypted, and it is sent from one user to the other to inform that it has finalized the communication and it has released UDP ports;
• "destiny user not reached", this signal is not in fact an IP package that propagates through Internet, but a signal that generates the transmitter itself when does not receive any answer after being sending a "transmitter ringing" package for a period greater than 10 or 15 seconds, or after being sending for more than 2 minutes the "transmitter ringing" package towards a receiver that continuously responds with the "receiver ringing" package; it is interpreted that the receiver has a transitory congestion problem caused by the added value ISP to which it is connected, or that it has recently changed its dynamic IP address and was not able yet to register it in the central server; the transmitter listens in its handset a tone of frequency of 425 +/-15 Hertz whose estimated cadence is 0,2 sound seconds / 0,3 silence seconds;
• "dead line", generated both by the transmitter and the receiver; as mentioned above, this signal is not an IP package that travels by Internet, but it is generated when the teledataphone does not access the Internet, or after having cut a communication and maintained the handset without hanging for more than 5 seconds; the user, transmitter or receiver, listens to a tone of frequency of 425 +/-15 Hertz whose estimated cadence is 0,2 sound seconds / 0,3 silence seconds;
• "destiny user not registered", generated by the transmitter when it does not find the receiver IP address, after having sent the "transmitter ringing" package; the transmitter generates a tone of an increasing frequency from 950 to 1.800 Hertz, in three successive and contiguous steps of 950, 1.400 and 1.800 Hertz, with 333 mseg. of duration each one, being in an estimated cadence of 1 second sound /1 silence seconds.

18. A method to prioritizes in a dynamic way the voice or video communications against the traffic data when a user attends one telephone call and/or a videoconference through an Internet connected device, and in simultaneous form, navigates the Internet from his/her computer or computers network, this method comprises:
a. releasing the package queues for quickly exhausting all data packages being exchanged at the moment of settling down the IP telephone call or videoconference; at the moment in which the communication is settled down, a maximum of 10 kbps bandwidth during 500 mseg is assigned at every IP package that does not come from known ports and public IP addresses, understanding as known ports and public IP addresses those which correspond to the interlocutor which carries out a voice or videoconference session located in the other remote end;
b. shooting timers in successive form one after another every 2 seconds as long as voice, video or some signaling packages from known ports and public IP addresses continue arriving;
c. setting up a bandwidth for a voice or video communication, that is, for all those packages that come from known ports and public IP addresses, and a remaining bandwidth for data, that is, for all those packages that do not come from known ports and public IP addresses, during the time in which the timer is active, understanding as remaining bandwidth the one which results from subtracting the voice communication or videoconference bandwidth from the effective bandwidth;
d. assigning again the 100% of the effective bandwidth to the traffic data when the signaling "cut" package arrives to any of them, or when voice or video packages do not arrive during a time greater than 30 seconds from known ports and IP addresses.

19. A method which prevents that a user registered in a central server to perform IP telephone calls, makes this registry process under an incorrect form when using the international telephone numeration with any device type, the method comprises:
a. an IP telephone calling from the central server to the subscriber as soon as the subscriber has registered himself/herself entering his/her complete data, being the central server an operator or an automated system which works in multifrequency way;
b. confirming the registry process and storing the information in the database if the subscriber responds and confirms the data by voice or via keyboard;
c. disabling the registry process and terminating the subscriber if he/she does not respond or not confirm the data, forcing the subscriber to become to a new registry process.

20. A method which prevents that a user registered in a central server to perform IP telephone calls, makes this registry process under an incorrect form when using the international telephone numeration with any device type, the method comprises:
a. remaining inhibited the device for IP telephony until the subscriber performs an IP telephone call to a prefixed telephone number as soon as he/she has registered himself/herself entering his/her complete data;
b. answering the prefixed IP telephone call receiver in an automatic form, being this receiver a centralized device with an incoming number identification;
c. informing with an aloud recording to the subscriber his/her telephone number;
d. confirming the registry process and storing the information in the database if the subscriber responds and confirms the data by voice or via keyboard,
e. disabling the registry process and terminating the subscriber if he/she does not respond or not confirm the data, forcing the subscriber to become to a new registry process.
